# EUROPÄISCHE PATENTSCHRIFT

(11) **EP 3 728 675 B1**
(45) Veröffentlichungstag und Bekanntmachung des Hinweises auf die Patenterteilung: **20.10.2021**
(21) Anmeldenummer: 18827049.0
(22) Anmeldetag: 19.12.2018
(51) Int. Cl.: C22C 38/02, B22F 3/105, B33Y 70/00, C21D 6/02, C21D 6/00, C22C 38/50, C22C 38/44, C22C 38/42, C22C 38/06, C22C 38/04, B22F 10/10, B22F 10/20, C22C 33/02

(54) **VERFAHREN ZUM ADDITIVEN FERTIGEN EINES GEGENSTANDES AUS EINEM MARAGING-STAHLPULVER**
METHOD FOR ADDITIVE MANUFACTURING OF AN ARTICLE FROM A MARAGING STEEL POWDER
PROCEDE DE FABRICATION ADDITIVE D'UN ARTICLE A PARTIR D'UNE POUDRE D'ACIER MARAGING

(30) Priorität: 22.12.2017 DE 102017131218
(43) Veröffentlichungstag der Anmeldung: 28.10.2020
(73) Patentinhaber: voestalpine BÖHLER Edelstahl GmbH & Co KG, 8605 Kapfenberg (AT)
(72) Erfinder: LEITNER, Harald, 8641 St. Marein (AT); SAMMT, Klaus, 8724 Spielberg (AT); ZUNKO, Horst, 8665 Langenwang (AT)
(74) Vertreter: HGF
(86) Internationale Anmeldenummer: PCT/EP2018/085788
(87) Internationale Veröffentlichungsnummer: WO 2019/121879

(56) Entgegenhaltungen:
- EP-A1- 2 546 383
- EP-A1- 2 617 856
- EP-A1- 3 109 033
- EP-A2- 2 682 484
- WO-A1-2017/106029
- DE-A1- 3 427 602
- DE-T2- 69 115 356
- JP-A- H02 310 339

## Beschreibung

Die vorliegende Erfindung betrifft ein Verfahren zum Herstellen eines Maraging-Stahles nach dem Oberbegriff des Anspruchs 1.

Bei den sogenannten Maraging-Stählen handelt es sich um Stähle, deren Legierung nahezu kohlenstofffrei ist.

Die Maraging-Stähle sind einerseits hochfest und besitzen andererseits eine gute Zähigkeit bei guten Verarbeitungs- und Schweißeigenschaften. Sie werden als Werkzeugstähle für Anwendung bei erhöhter Temperatur, z. B. bei formschwierigen Druckguss- oder Spritzgusswerkzeugen also insgesamt Kunststoffwerkzeugen sowie für die Herstellung von Messern und Klingen für das Sportfechten verwendet.

Beispiele für Maraging-Stähle sind beispielsweise die Warmarbeitsstähle 1.2709 und 1.6356.

Aus der DE 603 19 197 T2 ist ein Maraging-Stahl bekannt, der höchstens 0,01 % C, 8 bis 22 % Nickel, 5 bis 20 % Cobalt, 2 bis 9 % Molybdän, zwischen 0 und 2 % Titan maximal 1,7 % Aluminium, Magnesium zwischen 0 und 10 ppm, Sauerstoff weniger als 10 ppm, Stickstoff weniger als 15 ppm, Rest Eisen und zufällige Verunreinigungen besitzt, wobei dieser Maraging-Stahl Nitrideinschlüsse mit einer maximalen Länge von 15 µm und Oxideinschlüsse mit einer maximalen Länge von 20 µm enthält, wobei die Oxideinschlüsse Einschlüsse des Spinelltyps und Aluminum Oxideinschlüsse enthält und der Anteil an Einschlüssen des Spinelltyps mit einer Länge von mindestens 10 µm am Gesamtgehalt der Einschlüsse des Spinelltyps mit einer Länge von mindestens 10 µm und Al₂O₃ mit einer Länge von 10 µm größer ist als 0,33. Dies soll der Aufgabe Rechnung tragen, die nicht-metallischen Einschlüsse deutlich zu reduzieren.

Aus der EP 1 222 317 B1 ist ein hochfester rostfreier Automatenstahl bekannt, wobei dieser pulvermetallurgisch hergestellt wird und eine ausscheidungshärtbare Edelstahllegierung enthalten soll, wobei diese Legierung maximal 0,03 % Kohlenstoff, maximal 1 % Mangan, maximal 0,75 % Silizium, maximal 0,04 % Phosphor, 0,01 bis 0,05 % Schwefel ,10 bis 14 % Chrom, 6 bis 12 % Nickel, maximal 6 % Molybdän, maximal 4 % Kupfer, 0,4 bis 2,5 % Titan und weitere geringe Zulegierungen enthält, wobei der Rest Eisen und die üblichen Verunreinigungen sein sollen, wobei hieraus ein pulvermetallurgisches Produkt hergestellt werden soll, welches einer feinen Dispersion winziger Sulfitteilchen enthalten sollen, deren Hauptabmessung nicht größer als 5 µm ist. Ebenso kann hieraus ein Draht hergestellt werden.

Aus der EP 0 607 263 B1 ist ein ausscheidungshärtbarer martensitischer Stahl bekannt, der neben den üblichen geringer zulegierten Metallen 10 bis 14 % Chrom, 7 bis 11 % Nickel, 2,5 bis 6 % Molybdän und 0,5 bis 4 % Kupfer enthält, dabei können bis zu 9 % Cobalt enthalten sein, wobei der Rest aus Eisen und üblichen Verunreinigungen besteht.

Aus der EP 2 631 432 B1 ist ein Dampfturbinenrotor, eine korrespondierende Dampfturbine und ein Turbinenkraftwerk bekannt, wobei der Dampfturbinenrotor eine Dampfturbinenniederdruckentstufenlangschaufel ist, die aus einem ausscheidungshärtenden martensitischen Edelstahl gebildet ist, der weniger als 0,1 & Kohlenstoff enthält und 9 bis 14 % Chrom sowie 9 bis 14 % Nickel, 0,5 bis 2,5 % Molybdän, 0,5 % oder weniger Silizium besitzt. Aus der EP3109033A1 ist ein Verfahren zur additiven Fertigung eines Gegenstandes aus dem Pulver eines Maraging-Stahls bekannt.

Mittlerweile haben sich sogenannte additive Fertigungsverfahren industriell schon sehr weit durchgesetzt. Insbesondere bei der Fertigung von Prototypen sind additive Fertigungsverfahren heute sehr verbreitet.

Additive Fertigungsverfahren sind dabei Fertigungsverfahren bei denen über CAD-Daten bzw. aus CAD-Daten Druckdaten erzeugt werden und Gegenstände, zum Beispiel aus Kunststoffen mit geeigneten Druckern, verdruckt werden können.

Derartige Verfahren werden auch als generative Fertigungsverfahren bezeichnet.

Mit generativen Fertigungsverfahren lässt sich auch Metallpulver verdrucken, wobei dies häufig im sogenannten Pulverbettverfahren erzeugt wird. Als geeignete Pulverbettverfahren werden das selektive Laserschmelzen (SLM), das selektive Lasersintern (SLS), das selective heat sintering (SHS), das binder jetting und das Elektronenstrahlschmelzen (EBM) eingesetzt.

Bei diesen Verfahren wird ein Pulverbett erzeugt und in den Bereichen, in denen ein Gegenstand aus Metall entstehen soll, mit den entsprechenden Mitteln (Laser oder Elektronenstrahl) Energie eingebracht, die das Pulver des Pulverbetts dort selektiv aufschmilzt. Nach dem Aufschmelzen wird eine weitere Pulverlage aufgebracht und wiederum eingeschmolzen. Durch das Einschmelzen verbindet sich diese erschmolzene Pulverlage mit der darunterliegenden bereits geschmolzenen und wieder erstarrten Pulverlage oder noch in schmelzflüssiger Phase sich befindlichen Pulverlage, sodass ein Gegenstand quasi Schichtweise aufgebaut werden kann.

Aufgabe der Erfindung ist es, ein Verfahren zum Herstellen eines Gegenstands aus einem Maraging-Stahl zu schaffen, bei dem ein optimales Härte-Zähigkeitsverhältnis ermöglicht wird.

Die Aufgabe wird mit den Merkmalen des Anspruchs 1 gelöst.

Vorteilhafte Weiterbildungen sind in Unteransprüchen gekennzeichnet.

Es ist eine weitere Aufgabe einen Gegenstand aus einem Maraging-Stahl zu schaffen, der ein optimales Härte-Zähigkeitsverhältnis besitzt.

Die Aufgabe wird mit einem Gegenstand mit den Merkmalen des Anspruchs 8 gelöst.

Vorteilhafte Weiterbildungen sind in den hiervon abhängigen Unteransprüchen gekennzeichnet.

Es ist eine weitere Aufgabe, ein Stahlpulver zur Verwendung in einem additiven Fertigungsverfahren zu schaffen, welches einen Gegenstand mit einem optimalen Härte-Zähigkeitsverhältnis erzeugt.

Die Aufgabe wird mit den Merkmalen des Anspruchs 11 gelöst.

Bei den Maraging-Stählen nach dem Stand der Technik sind entweder eine hohe Härte oder eine hohe Zähigkeit erzielbar. Eine hohe Zähigkeit ist insbesondere dann möglich, wenn durch die Auslagerung ein hoher Teil von rückumgewandeltem Austenit ermöglicht wird. Dieser Anteil von rückumgewandelten Austenit hat jedoch wiederum einen negativen Einfluss auf die maximal erzielbare Härte.

Erfindungsgemäß wurde ein Legierungskonzept gefunden, welches bei einer hohen Härte gleichwohl eine hohe Zähigkeit ermöglicht.

Zudem wurde erfindungsgemäß herausgefunden, dass ein nach dem erfindungsgemäßen Legierungskonzept erzeugtes Metallpulver verdruckbar ist und die geforderten mechanischen Werte schon nach dem Auslagern zeigt, sodass ein zusätzlicher üblicherweise notwendig Lösungsglühschritt entfallen kann.

Erfindungsgemäß wird ein Legierungskonzept verwendet, welches im Wesentlichen auf Nickel, Aluminium, Titan und Silizium als Aufhärtungselementen aufbaut.

Um die Härte, Festigkeit und die Zähigkeit der Legierung auf einem hohen Niveau in Einklang zu bringen, wurde der Fokus auf zwei Punkte gelegt, nämlich einerseits die Steigerung der Härte- und Festigkeitswerte durch eine Modifikation der Ausscheidungsdichten und -typen. Hierzu wurde erfindungsgemäß der Gehalt der ausscheidungsbildenden Elemente Aluminum und Titan erhöht.

Um die Zähigkeit zu erhöhen, wurde der Anteil des rückumgewandelten Austenits erhöht, was durch eine Erhöhung des Nickelgehalts erreicht werden konnte.

Die Erfindung betrifft somit ein Verfahren zum Herstellen eines Gegenstandes aus einem Maraging-Stahl, wobei der Gegenstand aus einem Stahlpulver in einem additiven Fertigungsverfahren erzeugt wird und nach dem additiven Fertigungsverfahren der Gegenstand einer Auslagerungswärmebehandlung unterzogen wird, wobei
das Stahlpulver die folgende Zusammensetzung in M-% besitzt:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05

Rest Eisen und erschmelzungsbedingte Verunreinigungen, wobei das Pulver mit einer Korngrößenverteilung von 5 bis 150 µm verwendet wird.

In einer Weiterbildung betrifft die Erfindung ein Verfahren bei dem das Pulver mittels selektiven Laserschmelzen (SLM), selektivem Laserintern (SLS), selective heat sintering (SHS), oder Elektronstrahlschmelzeverfahren (EBM) additiv gefertigt wird.

In einer Weiterbildung betrifft die Erfindung ein Verfahren bei dem das Pulver mit einer Korngrößenverteilung von 10 bis 60 µm und insbesondere 15 bis 45 µm verwendet wird.

In einer Weiterbildung betrifft die Erfindung ein Verfahren bei dem die Auslagerung bei 475°C bis 525°C erfolgt.

In einer Weiterbildung betrifft die Erfindung ein Verfahren bei dem die Auslagerung für 2 bis 6 Stunden erfolgt.

In einer Weiterbildung betrifft die Erfindung ein Verfahren bei dem der verdruckte Gegenstand nach dem Auslagern einen Gehalt von rückumgewandeltem Austenit zwischen 4 und 8 Vol-% insbesondere 5 bis 7,5 Vol-% besitzt.

In einer Weiterbildung betrifft die Erfindung ein Verfahren bei dem der Gegenstand nach dem Auslagern eine Härte >50 HRC aufweist.

Ein weiterer Aspekt der Erfindung betrfiffteinen Gegenstand hergestellt in einem additiven Fertigungsverfahren aus einem Pulver an einem Maraging-Stahl mit der folgenden Zusammensetzung in M-%:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05

Rest Eisen und erschmelzungsbedingte Verunreinigungen, wobei das Pulver mit einer Korngrößenverteilung von 5 bis 150 µm verwendet wird.

In einer Weiterbildung betrifft die Erfindung einen Gegenstand wobei der Gegenstand mittels selektiven Laserschmelzen (SLM), selektivem Laserintern (SLS), selective heat sintering (SHS), oder Elektronstrahlschmelzeverfahren (EBM) hergestellt ist.

In einer Weiterbildung betrifft die Erfindung einen Gegenstand wobei der Gegenstand eine Härte von >50 HRC und einen Gehalt von rückumgewandeltem Austenit von 4 bis 8 Vol-% und insbesondere 5 bis 7,5 Vol-% besitzt.

In einer Weiterbildung betrifft die Erfindung ein Pulver wobei das Pulver die folgende Zusammensetzung in M-% besitzt:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05

Rest Eisen und erschmelzungsbedingte Verunreinigungen und eine Korngrößenverteilung von 5 bis 150 µm, insbesondere 10 bis 60 µm und insbesondere 15 bis 45 µm besitzt.

Die Erfindung wird anhand einer Zeichnung beispielhaft erläutert. Es zeigen dabei:
- Figur 1: Den Einfluss des Titangehalts;
- Figur 2: Den Einfluss des Molybdängehalts;
- Figur 3: Einen Zeit-/Temperaturplan einer Wärmebehandlung, welche aus einem Lösen-Spülvorgang mit anschließender Luftabkühlung auf Raumtemperatur und einem Auslagerungsprozess besteht.
- Figur 4: Das Phasendiagramm von Eisen-Nickel im Gleichgewicht;
- Figur 5: Die Hysterese der Umwandlungstemperaturen von Martensit und Austenit beim Heizen und Kühlen;
- Figur 6: Tabelle 1 zeigend die chemische Zusammensetzung erfindungsgemäßer Stähle;
- Figur 7: Tabelle 2 zeigend eine weitere Zusammensetzung eines erfindungsgemäßen Pulvers;
- Figur 8: Die Härte in Abhängigkeit von der Auslagerungstemperatur für unterschiedliche Legierungen;
- Figur 9: Der Austenitgehalt abhängig von der Auslagerungstemperatur für unterschiedliche Legierungen;
- Figur 10: Zugfestigkeit und Härtewerte für nicht erfindungsgemäß wärmebehandelte gedruckte Materialien.
- Figur 11: Der Härteverlauf abhängig von der Auslagerungstemperatur bei einem erfindungsgemäß gedruckten ausgelagerten Material und einem lösungsgeglühten und ausgelagerten Material.

Im Folgenden werden die wichtigsten Legierungselemente und deren Einfluss auf die Mikrostruktur und Eigenschaften in Maraging-Stähle und bei der Erfindung im Speziellen aufgelistet.

### Nickel (Ni):

Nickel ist das wichtigste Legierungselement in Maraging-Stählen. Da der C-Gehalt in Maraging-Legierungen niedrig ist, führt die Zugabe von Ni zu Fe zur Bildung eines kubischen Fe-Ni-Martensits. Außerdem ist die Kontrolle des Ni-Gehalts wichtig, da Ni ein Austenitstabilisierendes Element ist und daher ist Ni entscheidend für die Bildung von rückumgewandelten Austenit. Ni bildet mit zahlreichen Elementen wie Al, Ti und Mn intermetallische Ausscheidungen und spielt daher eine weitere entscheidende Rolle als ausscheidungsbildendes Element.

### Aluminium (Al):

Aluminium wird zu Maraging-Stählen als Ausscheidungselement hinzugefügt. Es erhöht die Mischkristallverfestigung und bildet, insbesondere mit Ni, intermetallischen Ausscheidungen. Ein höherer Al-Gehalt kann zur Anwesenheit von δ-Ferrit in der Mikrostruktur führen, was eine nachteilige Wirkung auf die mechanischen Eigenschaften und auf die Korrosionsbeständigkeit hat.

### Titan (Ti):

Titanium scheint eines der aktivsten Elemente in Maraging-Stählen zu sein. Es scheidet sich während des Auslagerns aus und kann als das wichtigste Legierungselement für die Bildung von Ausscheidungen in Maraging-Stählen gesehen werden. Es wurde als ausscheidungsbildendes Element in den ersten entwickelten Maraging-Stählen sowie in heutzutage komplexen Legierungssystemen verwendet.

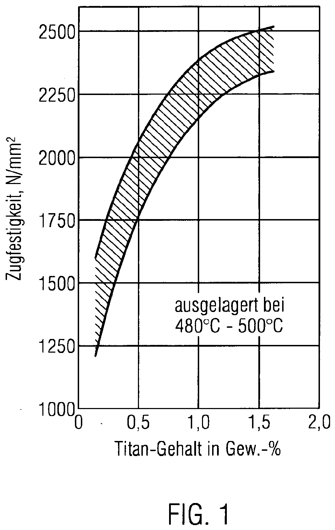

Der größte Vorteil ist die rasche Ausscheidung, so ist Titan z.B. viel aktiver als Mo in C- und T-artige Maraging-Stählen in der frühen Stadien der Ausscheidung. Der enorme Einfluss des Ti-Gehalts auf die Zugfestigkeit von 18% Ni- und Co-haltigen Maraging-Stählen kann der Abbildung 1 entnommen werden. Zusätzlich wird Ti in kleinen Mengen zu Ti-freien Maraging-Stählen beigefügt um Karbide zu bilden. Das Ziel dabei ist es den Kohlenstoff C zu binden, damit keine anderen Ausscheidungselemente Karbide bilden können.

Den Einfluss des Ti-Gehalts erkennt man in Figur 1.

### Molybdän (Mo):

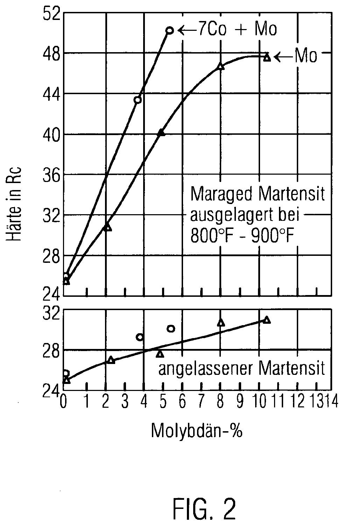

Mit zunehmendem Mo-Gehalt kann eine Zunahme der Härte nach Auslagerung beobachtet werden (Abbildung 2), da Mo mit Ni intermetallischen Verbindungen eingeht. Das Ausscheidungsverhalten von Mo wird stark von anderen Elementen beeinflusst, unter anderem besonders von Kobalt (Co). Durch die Zugabe von Co wird die Löslichkeit von Mo in der Matrix gesenkt und Mo wird dazu gezwungen Ausscheidungen zu bilden. Dies führt zu einer Erhöhung der Härte (Abbildung 2). Des Weiteren erhöht Mo auch die Mischkristallverfestigung (Abbildung 2) und verbessert die Korrosionsbeständigkeit von hoch Cr-haltigen Maraging-Stählen.

Den Einfluss des Mo-Gehalts erkennt man in Figur 2.

### Chrom (Cr):

Chrom wird hinzugefügt um die Korrosionsbeständigkeit von Maraging-Stählen zu verbessern. Dies führt zu Stählen, die zum Beispiel als Kunststoffformenstähle verwendet werden können, welche einem chemischen Angriff bei der Herstellung von Kunststoffen ausgesetzt sind. Das Zulegieren von Cr fördert die Ausscheidung der Laves-Phase. Allerdings können höhere Gehalte an Cr zur Bildung der σ-Phase führen, welche sich negativ auf die mechanischen Eigenschaften auswirkt. Darüber hinaus kann es bei Langzeitalterungen zu einer spinodalen Entmischung in Fe- reiche und Cr- reiche Phasen kommen, welche die Kerbschlagzähigkeit senkt.

### Mangan (Mn):

Um preiswerte Maraging-Stähle zu entwickeln, wurde Mn teilweise eingesetzt um das teurere Ni zu ersetzen. Mn bildet gleichmäßig mit Ni einen Mn Martensit, hat aber eine weniger austenitstabilisierende Wirkung und daher ist in Fe-Mn-Legierungen eine signifikante Menge an δ-Ferrit vorhanden. Dieser δ-Ferrit hat eine negative Auswirkung auf die mechanischen Eigenschaften und auf die Korrosionsbeständigkeit.

Des Weiteren ist bereits bekannt, dass Mn mit Fe und Ni intermetallische Verbindungen eingeht.

### Kohlenstoff (C):

Kohlenstoff ist kein Legierungselement eines Maraging-Stahls. Aufgrund der Tatsache, dass Maraging-Stähle ihre hohe Festigkeit nicht durch Karbide verliehen bekommen, wird der C-Gehalt während der Produktion des Stahls so gering wie möglich gehalten. Deshalb liegt der C-Gehalt eines Maraging-Stahl im Bereich von 1/100%.

Die Korrosionsbeständigkeit und die Schweißbarkeit verschlechtern sich, wenn Kohlenstoff Cr-Karbide in nichtrostenden Maraging-Stählen bildet. In PH 13-8 Mo Maraging-Stählen bildet C Karbide mit Mo und Cr.

### Kupfer (Cu):

Cu agiert als ausscheidungsförderndes Element in Maraging-Stählen, wobei es aber keine Verbindung mit anderen Elementen eingeht. Zu Beginn scheidet es sich mit einer kubisch raumzentrierten Struktur in der Fe Matrix aus. Während des Auslagerns entwickelt es 9R Struktur und schlussendlich bildet es ihre im Gleichgewicht befindliche kubisch flächenzentrierte Struktur aus. Die Rolle des Kupfers ist es sich rasch auszuscheiden und als Keimbildungsstelle für andere Ausscheidungen zu dienen.

### Silizium (Si):

Silizium wird üblicherweise als Verunreinigungselement in Stählen angesehen. Allerdings bildet Si in Maraging-Stählen intermetallische Phasen und im speziellen, bei Legierungen die Ti enthalten, die sogenannte Ni16Si7Ti6 G-Phase. Der Begriff G-Phase wird deshalb verwendet, weil jene Phase zum ersten Mal an Korngrenzen (grain boundaries) entdeckt wurde, dies ist bei Maraging-Stählen jedoch nicht der Fall.

Die guten mechanischen Eigenschaften von Maraging-Stählen kann man auf eine zweistufige Wärmebehandlung zurückführen.

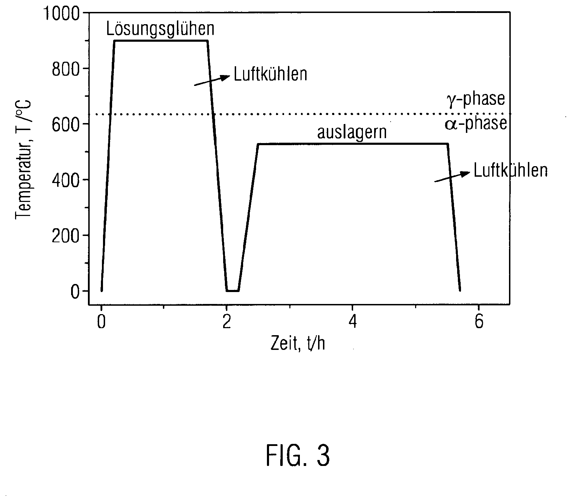

Figur 3 zeigt exemplarisch einen Zeit-Temperatur Plan einer solchen Wärmebehandlung auf, welche aus einem Lösungsglühvorgang mit anschließender Luftabkühlung auf Raumtemperatur und einem Auslagerungsprozess besteht.

Wenn aus dem austenitischen Einphasenfeld nach dem Lösungsglühvorgang abgeschreckt wird, wird ein weicher aber stark verzerrter Ni-Martensit gebildet den man leicht bearbeiten und bei Bedarf kaltbearbeiten kann. Das darauffolgende Auslagern wird typischerweise in einem Temperaturbereich von 400°C bis 600°C durchgeführt. Während dem Auslagerungsprozess treten drei Reaktionen auf:
(i) Ausscheidung von intermetallischen Phasen
(ii) Erholung des Martensits
(iii)Bildung von rückumgewandelten Austenit

Die Ausscheidung von nm-großen intermetallischen Phasen ist verantwortlich für den immensen Anstieg der Festigkeit nach dem Auslagern. Maraging-Stähle weisen eine Reihe von essentiellen Vorteilen auf:
- Lediglich eine zweistufige Wärmebehandlung notwendig
- Leichtes Bearbeiten von komplexen Formen im nicht ausgelagerten Zustand möglich
- Anschließendes Härten mit minimaler Verformung

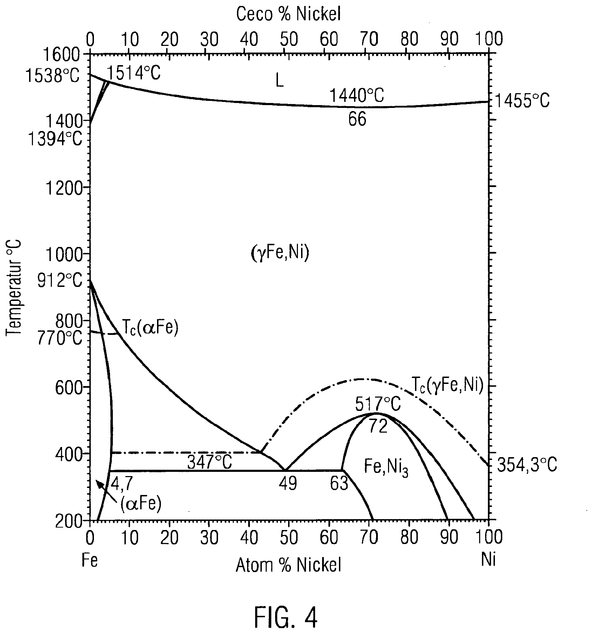

Das Phasendiagramm von Fe-Ni im Gleichgewicht ist in Figur 4 dargestellt. Daraus kann man ablesen, dass Ni die Umwandlungstemperatur von Austenit zu Ferrit senkt und dass die Struktur im Gleichgewicht bei Raumtemperatur, von jenen Legierungen die mehr als einige wenige Prozent Ni beinhalten, aus Austenit und Ferrit besteht. Allerdings wird das Material in der Praxis unter realen Abkühlbedingungen, ausgehend vom austenitischen Einphasenfeld, nicht in eine im Gleichgewicht befindliche Zusammensetzung aus Austenit und Ferrit zerfallen. Viel mehr wird der Austenit, bei weiterer Abkühlung, in einen kubischen Martensit umgewandelt.

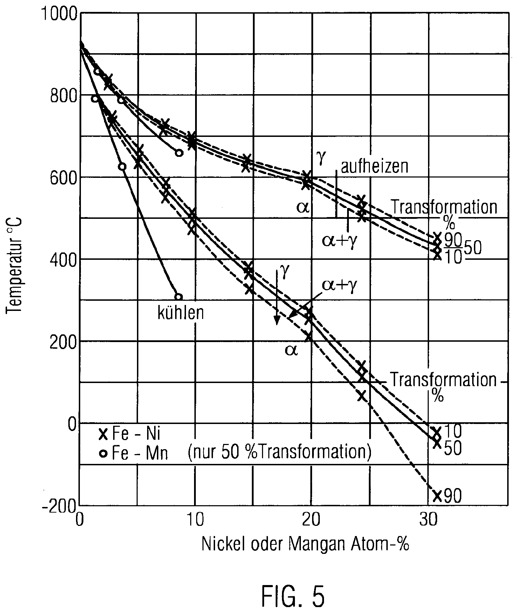

Die Alterung der martensitischen Struktur ist möglich durch den Einfluss von Ni in Maraging-Stählen, was zu einer Hysterese der Umwandlungstemperaturen von Martensit und Austenit beim Heizen und Kühlen führt (Figur 5). Mit zunehmendem Ni-Gehalt sinkt die Umwandlungstemperatur von Heizen und Kühlen. Dabei hängt die Differenz der Umwandlungstemperaturen vom Ni-Gehalt ab.

Nach dem Lösungsglühen wandelt sich das Material zu einem Martensit um, wenn man unter der Umwandlungstemperatur abkühlt. Abhängig vom Ni-Gehalt und den anderen Legierungselementen kann man einen gewissen Anteil an Austenit bei Raumtemperatur rückumwandeln. Wenn man die Mikrostruktur unter der α-γ Umwandlungstemperatur wieder erwärmt, zerfällt der Martensit in eine Gleichgewichtsstruktur aus Austenit und Ferrit. Die Geschwindigkeit dieser Rückumwandlungsreaktion hängt von der angewandten Temperatur ab. Erfreulicherweise ist diese Umwandlung bei Maraging-Stählen langsam genug damit sich Ausscheidungen der intermetallischen Phasen von der übersättigten Lösung bilden, bevor die Rückumwandlungsreaktion dominiert.

Wenn man andererseits die Legierung über der α-γ Umwandlungstemperatur erwärmt wandelt sich der Martensit durch Gleitvorgänge zurück um.

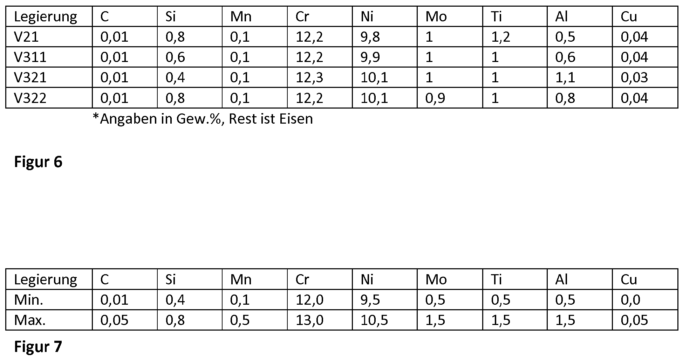

Das erfindungsgemäße Legierungskonzept basiert im Wesentlichen auf einem Konzept, das auf Ni, Al, Ti und Si (siehe Figur 6) als Aushärtungselemente aufbaut.

Um die Härte, Festigkeit und die Zähigkeit der Legierung zu steigern, wurde der Fokus der Legierungsentwicklung im Wesentlichen auf zwei Punkte gelegt:
- Eine Steigerung der Härte- und Festigkeitswerte wurde durch eine Modifikation der Ausscheidungsdichten und -typen erzielt. Dazu wurden die Gehalte der ausscheidungsbildenden Elemente Al und Ti erhöht.
- Um die Zähigkeit zu erhöhen, wurde der Anteil des rückumgewandelten Austenits erhöht. Dies konnte durch Erhöhung des Ni-Gehalts erreicht werden.

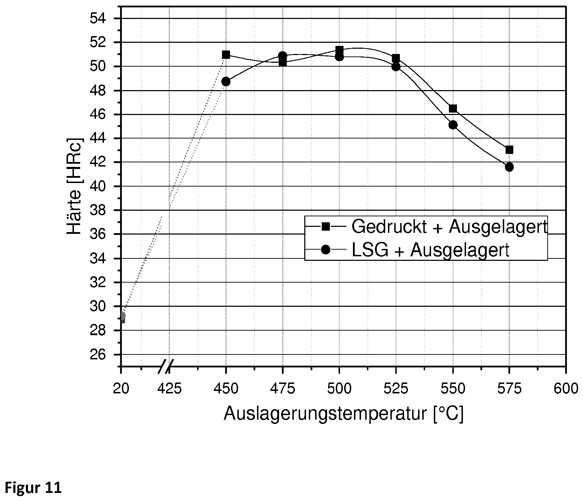

Im Gegensatz zu den vorbenannten üblichen Verfahren, insbesondere der zweistufigen Wärmebehandlung, hat sich erfindungsgemäß herausgestellt, dass insbesondere bei im Laserschmelzverfahren verdruckten Maraging-Pulvern nach der Erfindung, der Lösungsglühschritt wegfallen kann und allein der Auslagerungsschritt dafür sorgt, dass das angestrebte Festigkeits- und Zähigkeitsniveau erreicht wird. Dies war nicht zu erwarten und ist einigermaßen überraschend und bringt den Vorteil mit sich, dass lediglich noch eine Auslagerungsbehandlung durchgeführt werden muss, was den Gesamtprozess abkürzt und selbstverständlich auch günstiger macht. Dies erkennt man sehr gut an Figur 11, in der ersichtlich ist, dass bei dem erfindungsgemäßen Material das Festigkeitsniveau und auch die Lösungsglühe erreicht werden.

Die Erfindung wird im Detail durch folgende Beispiele näher beschrieben.

Pulver mit einer chemischen Zusammensetzungen entsprechend Figur 7 und einer Kornfraktion von 15 - 45 µm wird durch Gasverdüsung hergestellt. Hierfür wird Stabmaterial, welches im Vakuuminduktionsofen erschmolzen und gegebenenfalls mittels ESU oder VLBO umgeschmolzen wurde, mit der identen Zusammensetzung in einem Vakuuminduktionsofen aufgeschmolzen und anschließend mittels Inertgas (Ar, He, N) verdüst. Die Pulverfraktion wird durch anschließendes Sieben eingestellt.

Die erhaltene Pulverfraktion wird im Anschluss in einem 3D Drucker, der nach dem Prinzip des selektiven Laserschmelzens arbeitet, zu Probekörpern verarbeitet.

Das verdruckte Material wird in Form dieser Probekörper in weiterer Folge hinsichtlich Gefüge, Härte-Auslagerungsverhalten und mechanischen Eigenschaften in unterschiedlichen Wärmebehandlungszuständen charakterisiert.

In diesem Beispiel wird der Zustand "as-printed + ausgelagert" mit dem Zustand "printed + lösungsgeglüht + ausgelagert" verglichen.

Die Lösungsglühung erfolgte bei 1000°C für 1h und das Auslagern wurde für 3h bei 525°c durchgeführt. Die Härte wurde im Anschluss nach der Rockwell-Methode bestimmt. Die Ermittlung der mechanischen Eigenschaften erfolgte mittels Zugversuchen.

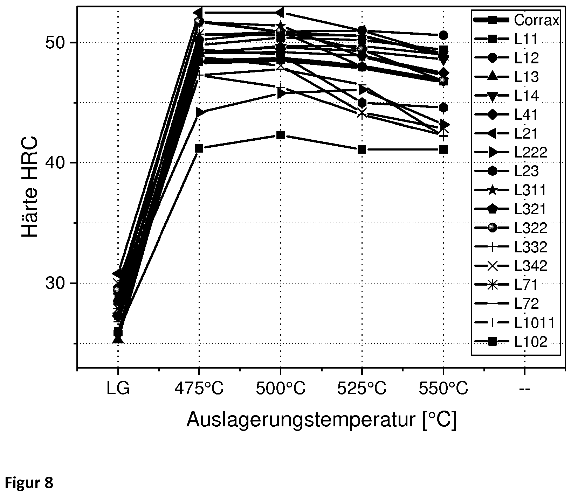

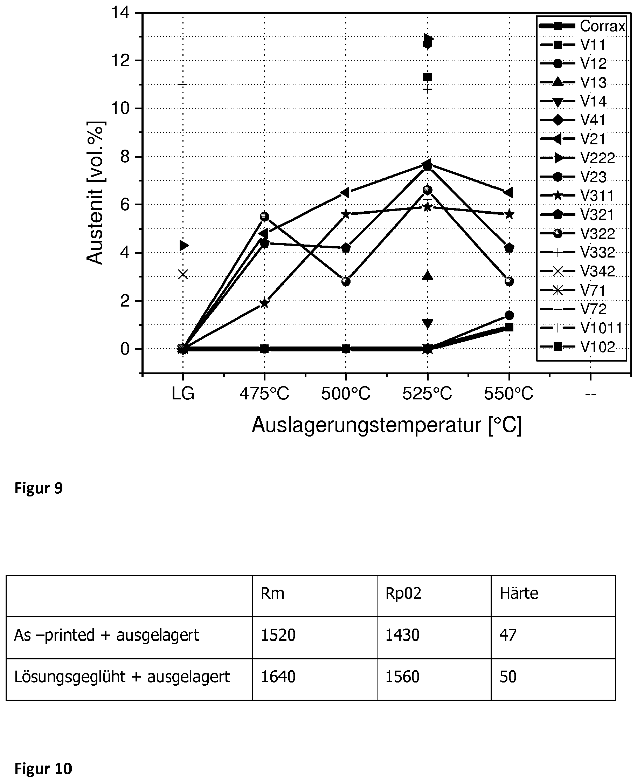

In den Figuren 8 und 9 sind die Kennwerte einer Mehrzahl von Legierungen bezüglich auf Härte und Zähigkeit dargestellt.

Hierbei entsprechen in beiden Figuren die Legierungen V21, V311, V321 und V322 gemäß der Tabelle in Figur 6 den erfindungsgemäßen Legierungen.

Man erkennt in Figur 8, dass die entsprechenden erfindungsgemäßen Legierungen im oberen Bereich der Härte aller Vergleichslegierungen rangieren und somit über absolut ausreichende Härteeigenschaften verfügen.

In Figur 9 ist der Austenitanteil abhängig von der Auslagerungstemperatur gezeigt. Hierbei werden unterschiedliche Anteile von rückumgewandelten Austenit erzielt, wobei der rückumgewandelte Austenit verantwortlich für die Zähigkeit des Materials ist. Man erkennt, dass die erfindungsgemäßen Legierungen allesamt, insbesondere bei einer Auslagerungstemperatur von 525°C sehr dicht beieinander liegen, wobei die Austenitanteile für die hohe Zähigkeit absolut ausreichend sind.

Vergleicht man die Vergleichslegierung, erkennt man, dass es zwar Legierungen gibt, die einen höheren Austenitanteil haben, vergleicht man dies jedoch mit Figur 8 erkennt man, dass diese in der Härte zurückbleiben. Andere Legierungen haben einen deutlich geringeren Austenitanteil oder gar keinen Austenitanteil und sind in der Zähigkeit daher sehr schlecht auch wenn sie in der Härte besser sind.

Somit zeigt sich, dass die Erfindung eine besonders gelungene Kombination aus Härte und Zähigkeit ermöglicht. Die Härte nach dem Auslagern liegt dabei oberhalb 50 HRC.

Wie aus Figur 10 abzuleiten ist, fallen bei einer nicht erfindungsgemäßen Ti-freien Variante die Ergebnisse der mechanischen Prüfung zwischen "gedruckt + ausgelagert" und "gedruckt + lösungsgeglüht + ausgelagert" unterschiedlich aus. Das gedruckte und ausgelagerte, nicht erfindungsgemäße Material bleibt mit seinen mechanischen Eigenschaften hinter herkömmlich wärmebehandelten, Lösungsgeglühten und ausgelagerten Material zurück.

Zur Erreichung der besten mechanischen Eigenschaften ist bei diesen nicht erfindungsgemäßen Beispielen nach dem Drucken eine Lösungsglühbehandlung vor dem Auslagern erforderlich.

Wie schon ausgeführt erkennt man bei der erfindungsgemäßen Variante (Figur 11), dass das Verdrucken und anschließende Auslagern und auch ohne Lösungsglühbehandlung zum gewünschten Ergebnis führt.

## Patentansprüche

1. Verfahren zum Herstellen eines Gegenstandes aus einem Maraging-Stahl, wobei der Gegenstand aus einem Stahlpulver in einem additiven Fertigungsverfahren erzeugt wird und nach dem additiven Fertigungsverfahren der Gegenstand einer Auslagerungswärmebehandlung unterzogen wird, wobei
das Stahlpulver die folgende Zusammensetzung in M-% besitzt:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05
Rest Eisen und erschmelzungsbedingte Verunreinigungen, wobei das Pulver mit einer Korngrößenverteilung von 5 bis 150 µm verwendet wird.

2. Verfahren nach Anspruch 1,
**dadurch gekennzeichnet,**
**dass** das Pulver mittels selektiven Laserschmelzen (SLM), selektivem Laserintern (SLS), selective heat sintering (SHS), oder Elektronenstrahlschmelzverfahren (EBM) additiv gefertigt wird.

3. Verfahren nach einem der vorhergehenden Ansprüche,
dass das Pulver mit einer Korngrößenverteilung von 10 bis 60 µm und insbesondere 15 bis 45 µm verwendet wird.

4. Verfahren nach Anspruch 1, **dadurch gekennzeichnet, dass** die Auslagerung bei 475°C bis 525°C erfolgt.

5. Verfahren nach Anspruch 1, **dadurch gekennzeichnet, dass** die Auslagerung für 2 bis 6 Stunden erfolgt.

6. Verfahren nach einem der vorhergehenden Ansprüche, **dadurch gekennzeichnet, dass** der verdruckte Gegenstand nach dem Auslagern einen Gehalt von rückumgewandeltem Austenit zwischen 4 und 8 Vol.-% insbesondere 5 bis 7,5 Vol.-% besitzt.

7. Verfahren nach einem der vorhergehenden Ansprüche **dadurch gekennzeichnet, dass** der Gegenstand nach dem Auslagern eine Härte >50 HRC aufweist.

8. Gegenstand hergestellt in einem additiven Fertigungsverfahren aus einem Pulver eines Maraging-Stahls mit der folgenden Zusammensetzung in M-%:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05
Rest Eisen und erschmelzungsbedingte Verunreinigungen, wobei das Pulver mit einer Korngrößenverteilung von 5 bis 150 µm verwendet wird.

9. Gegenstand nach Anspruch 8, **dadurch gekennzeichnet, dass** der Gegenstand mittels selektiven Laserschmelzen (SLM), selektivem Laserintern (SLS), selective heat sintering (SHS), oder Elektronenstrahlschmelzverfahren (EBM) hergestellt ist.

10. Gegenstand nach Anspruch 8 oder 9, **dadurch gekennzeichnet, dass** der Gegenstand eine Härte von >50 HRC und einen Gehalt von rückumgewandeltem Austenit von 4 bis 8 Vol.-% und insbesondere 5 bis 7,5 Vol.-% besitzt.

11. Pulver zur Verwendung in dem Verfahren nach einem der Ansprüche 1 bis 7, **dadurch gekennzeichnet, dass** das Pulver die folgende Zusammensetzung in M-% besitzt:
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05
Rest Eisen und erschmelzungsbedingte Verunreinigungen und eine Korngrößenverteilung von 5 bis 150 µm, insbesondere 10 bis 60 µm und insbesondere 15 bis 45 µm besitzt.

## Claims

1. A method of manufacturing an item from a maraging steel, wherein the item is created from a steel powder using an additive manufacturing process and, once the additive manufacturing process has been completed, subjected to an age-hardening heat treatment, wherein the steel powder has the following composition in M%:
C = 0.01-0.05
Si = 0.4-0.8
Mn = 0.1-0.5
Cr = 12.0-13.0
Ni = 9.5-10.5
Mo = 0.5-1.5
Ti = 0.5-1.5
Al = 0.5-1.5
Cu = 0.0-0.05
The remainder is iron and impurities arising from melting the steel during production, in regard to which the powder is used with a particle size distribution of 5 to 150 µm.

2. The method in accordance with Claim 1
**characterised in that**
the powder is produced by means of additive manufacturing using selective laser melting (SLM), selective laser sintering (SLS), selective heat sintering (SHS) or electron beam melting (EBM).

3. The method in accordance with one of the foregoing claims,
**characterised in that** the powder is used with a particle size distribution of 10 to 60 µm, and in particular 15 to 45 µm.

4. The method in accordance with Claim 1, **characterised in that** the die age-hardening is carried out at 475°C to 525°C.

5. The method in accordance with Claim 1, **characterised in that** the age-hardening is carried out for 2 to 6 hours.

6. The method in accordance with one of the foregoing claims, **characterised in that**, after the age-hardening, the printed item possesses a reconverted austenite content of between 4 and 8% by volume, in particular 5 to 7.5% by volume.

7. The method in accordance with one of the foregoing claims, **characterised in that**, after the age-hardening, the item possesses a degree of hardness of >50 HRC.

8. The item generated using an additive manufacturing process from a powder of a maraging steel having the following composition in M%:
C = 0.01-0.05
Si = 0.4-0.8
Mn = 0.1-0.5
Cr = 12.0-13.0
Ni = 9.5-10.5
Mo = 0.5-1.5
Ti = 0.5-1.5
Al = 0.5-1.5
Cu = 0.0-0.05
The remainder is iron and impurities arising from melting the steel during production, in regard to which the powder is used with a particle size distribution of 5 to 150 µm.

9. The item in accordance with Claim 8, **characterised in that** the item is produced by means of selective laser melting (SLM), selective laser sintering (SLS), selective heat sintering (SHS) or electron beam melting (EBM).

10. The item in accordance with Claim 8 or 9, **characterised in that** the item possesses a degree of hardness of >50 HRC and a reconverted austenite content of 4 to 8% by volume, and in particular 5 to 7.5% by volume.

11. A powder for use in the process in accordance with one of Claims 1 to 7, **characterised in that** the powder has the following composition in M%:
C = 0.01-0.05
Si = 0.4-0.8
Mn = 0.1-0.5
Cr = 12.0-13.0
Ni = 9.5-10.5
Mo = 0.5-1.5
Ti = 0.5-1.5
Al = 0.5-1.5
Cu = 0.0-0.05
The remainder is iron and impurities arising from melting the steel during production, in regard to which the powder is used with a particle size distribution of 5 to 150 µm, in particular 10 to 60 µm, and in particular 15 to 45 µm.

## Revendications

1. Procédé de fabrication d'un objet à partir d'un acier maraging, dans lequel
l'objet est produit à partir d'une poudre d'acier dans le cadre d'un procédé de fabrication additive et après le procédé de fabrication additive l'objet est soumis à un traitement thermique de précipitation, la poudre d'acier ayant la composition suivante en M-% :
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05
le reste étant du fer et des impuretés résultant de la fusion, dans lequel la poudre est utilisée avec une distribution granulométrique de 5 à 150 µm.

2. Procédé selon la revendication 1,
**caractérisé en ce que**,
la poudre est produite de manière additive au moyen d'une fusion laser sélective (SLM), d'un frittage laser sélectif (SLS), d'un frittage thermique sélectif (SHS) ou d'une fusion par faisceau d'électrons (EBM).

3. Procédé selon une des revendications précédentes,
la poudre est utilisée avec une distribution granulométrique de 10 à 60 µm et notamment de 15 à 45 µm.

4. Procédé selon la revendication 1, **caractérisé en ce que** la précipitation a lieu à 475°C jusqu'à 525°C.

5. Procédé selon la revendication 1, **caractérisé en ce que** la précipitation a lieu pendant 2 à 6 heures.

6. Procédé selon une des revendications précédentes, **caractérisé en ce que** l'objet imprimé après la précipitation présente une teneur en austénite reconvertie comprise entre 4 et 8 % en volume, notamment 5 à 7,5 % en volume.

7. Procédé selon une des revendications précédentes, **caractérisé en ce que** l'objet a une dureté > 50 HRC après la précipitation.

8. Objet fabriqué selon un procédé de fabrication additive à partir d'une poudre d'un acier maraging de composition suivante en M-% :
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05
le reste étant du fer et des impuretés résultant de la fusion, dans lequel la poudre est utilisée avec une distribution granulométrique de 5 à 150 µm.

9. Objet selon la revendication 8, **caractérisé en ce que** l'objet est produit par des procédés de fusion laser sélective (SLM), de frittage laser sélectif (SLS), de frittage thermique sélectif (SHS) ou de fusion par faisceau d'électrons (EBM).

10. Objet selon la revendication 8 ou 9, **caractérisé en ce que** l'objet a une dureté > 50 HRC et une teneur en austénite reconvertie de 4 à 8 % en volume et notamment de 5 à 7,5 % en volume.

11. Poudre utilisable dans le procédé selon une quelconque des revendications 1 à 7, **caractérisée en ce que** la poudre a la composition suivante en M-% :
C = 0,01-0,05
Si = 0,4-0,8
Mn = 0,1-0,5
Cr = 12,0-13,0
Ni = 9,5-10,5
Mo = 0,5-1,5
Ti = 0,5-1,5
Al = 0,5-1,5
Cu = 0,0-0,05
le reste étant du fer et des impuretés résultant de la fusion et présente une distribution granulométrique de 5 à 150 µm, en particulier de 10 à 60 µm et notamment de 15 à 45 µm.
